# EUROPEAN PATENT APPLICATION

(11) **EP 4 529 290 A1**
(43) Date of publication of application: **26.03.2025**
(21) Application number: 23858730.7
(22) Date of filing: 15.05.2023
(51) Int. Cl.: H04W 52/02

(54) **COMMUNICATION METHOD AND DEVICE, AND STORAGE MEDIUM**

(30) Priority: 30.08.2022 CN 202211058101
(71) Applicant: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN); CHEN, Mengzhu, Shenzhen, Guangdong 518057 (CN); LIU, Kun, Shenzhen, Guangdong 518057 (CN); HU, Youjun, Shenzhen, Guangdong 518057 (CN)
(74) Representative: Aipex B.V.
(86) International application number: PCT/CN2023/094134
(87) International publication number: WO 2024/045691

(57) **Abstract**

Provided are a communication method, a device, and a storage medium. A communication method applied to a first communication node includes sending a wake-up signal to a second communication node over the unlicensed spectrum and sending a physical downlink control channel corresponding to the wake-up signal to the second communication node.

## Description

This application claims priority to Chinese Patent Application No. 202211058101.5 filed with the China National Intellectual Property Administration (CNIPA) on Aug. 30, 2022, the disclosure of which is incorporated herein by reference in its entirety.

### TECHNICAL FIELD

The present application relates to the field of communication technology, for example, a communication method, a device, and a storage medium.

### BACKGROUND

To meet the requirements of battery life, an ultra-low power wake-up mechanism may be used. That is, a user employs a separate receiving apparatus to receive a low-power wake-up signal and uses the wake-up signal to activate the main receiving apparatus for data transmission and reception. When the terminal does not detect the low-power wake-up signal, the main receiving apparatus remains in a sleep state, which further reduces the power consumption of the terminal. However, how to transmit the wake-up signal over the unlicensed spectrum is an urgent problem to be solved.

### SUMMARY

Embodiments of the present application provide a communication method, a device, and a storage medium, which enable the transmission of a wake-up signal over the unlicensed spectrum.

An embodiment of the present application provides a communication method. The communication method is applied to a first communication node and includes the following:

A wake-up signal is sent to a second communication node over the unlicensed spectrum.

A physical downlink control channel corresponding to the wake-up signal is sent to the second communication node.

An embodiment of the present application provides a communication method. The communication method is applied to a second communication node and includes the following:

A wake-up signal sent by a first communication node is detected over the unlicensed spectrum.

The detection of a physical downlink control channel corresponding to the wake-up signal is determined according to the detection result of the wake-up signal.

An embodiment of the present application provides a communication device. The device includes a memory and one or more processors.

The memory is configured to store one or more programs.

When executed by the one or more processors, the one or more programs cause the one or more processors to perform the method of any one of the preceding embodiments.

An embodiment of the present application provides a storage medium. The storage medium stores a computer program which, when executed by a processor, performs the method of any one of the preceding embodiments.

### BRIEF DESCRIPTION OF DRAWINGS

FIG. 1 is a flowchart of a communication method according to an embodiment of the present application.
FIG. 2 is a flowchart of another communication method according to an embodiment of the present application.
FIG. 3 is a diagram illustrating the configuration of transmission opportunities according to an embodiment of the present application.
FIG. 4 is a block diagram of a communication apparatus according to an embodiment of the present application.
FIG. 5 is a block diagram of another communication apparatus according to an embodiment of the present application.
FIG. 6 is a diagram illustrating the structure of a communication device according to an embodiment of the present application.

### DETAILED DESCRIPTION

Embodiments of the present application are described below in conjunction with drawings. The present application is described below in conjunction with accompanying drawings of the embodiments. The examples given are only used to explain the present application.

The rapid development of wireless communication technology has ushered people into an increasingly interconnected and networked society. High-speed and low-latency wireless communication relies on the efficient management and allocation of network resources between one or more terminals (that is, user equipment) and one or more wireless access network nodes (including but not limited to base stations). The new generation of networks is expected to provide high-speed, low-latency, and ultra-reliable communication capabilities to meet the needs of various industries and users. In light of this, how to transmit a wake-up signal over the unlicensed spectrum is an urgent problem to be solved.

It should be noted that the transmission opportunity in the embodiments may also be understood as the transmission occasion.

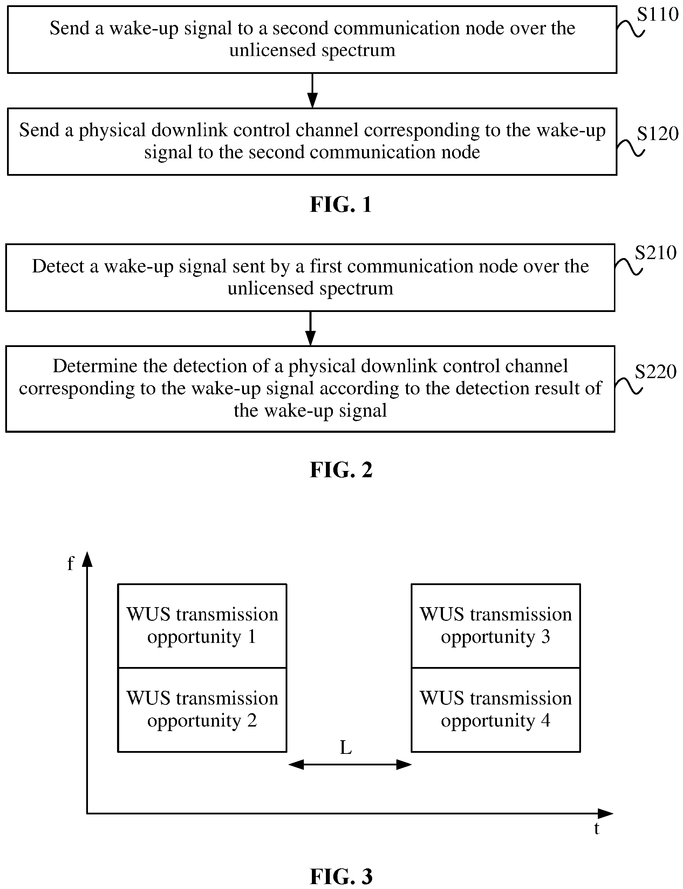

In an embodiment, FIG. 1 is a flowchart of a communication method according to an embodiment of the present application. This embodiment is applied to the case where a wake-up signal is sent over the unlicensed spectrum. The embodiment may be executed by a first communication node. Illustratively, the first communication node may be a wireless access network node (such as a base station). As shown in FIG. 1, the embodiment includes S110 and S120.

In S110, a wake-up signal is sent to a second communication node over the unlicensed spectrum.

In S120, a physical downlink control channel corresponding to the wake-up signal is sent to the second communication node.

In an embodiment, the first communication node seizes resources over the unlicensed spectrum through the listen-before-talk (LBT) mechanism and sends a wake-up signal to the second communication node on the successfully seized resources; after sending the wake-up signal, the first communication node sends a physical downlink control channel corresponding to the wake-up signal to the second communication node, thereby achieving the transmission process of the wake-up signal over the unlicensed spectrum.

In an embodiment, a first preset number of transmission opportunities for the wake-up signal are provided, where the first preset number of transmission opportunities are distributed in frequency domain resources and/or time domain resources. In an embodiment, the first preset number may be a positive integer greater than or equal to 1, that is, the first communication node has at least one opportunity to send a wake-up signal to the second communication node over the unlicensed spectrum. In an embodiment, the transmission opportunities for sending the wake-up signal may be distributed in the time domain resources. Illustratively, the transmission opportunities are distributed in the time domain resources at a preset interval, and the preset interval may be obtained by higher-layer signaling configuration or may be a fixed value. In an embodiment, the transmission opportunities for the wake-up signal may be distributed in the frequency domain resources. Illustratively, the transmission opportunities may be continuously distributed in the frequency domain resources. In an embodiment, part of the transmission opportunities for the wake-up signal may be distributed in the frequency domain resources, and the other part of the transmission opportunities may be distributed in the time domain resources; the number of transmission opportunities distributed in the frequency domain resources is less than or equal to the number of transmission opportunities distributed in the time domain resources, and the value of the number of transmission opportunities distributed in the frequency domain resources may be determined by higher-layer signaling, may be a predefined value, or may be determined according to at least other parameters, where the other parameters include at least one of the following: bandwidth of the wake-up signal, system bandwidth, or reception bandwidth of the terminal.

In an embodiment, the period of a transmission window where the wake-up signal is located is a first preset value, and/or the length of the transmission window where the wake-up signal is located is a second preset value.

The first preset value is determined by at least one of the following: the period of a transmission window for the wake-up signal over the licensed spectrum or a third preset value. The second preset value is determined by at least one of the following: the length of the transmission window for the wake-up signal over the licensed spectrum or a fourth preset value. The third preset value is a positive integer greater than zero, and the fourth preset value is a positive integer greater than zero. In an embodiment, when the first communication node sends a wake-up signal to the second communication node over the unlicensed spectrum, the period of a transmission window where each wake-up signal is located may be a first preset value, and/or the length of the transmission window where each wake-up signal is located may be a second preset value. In an embodiment, the first preset value may be determined by the third preset value and/or the period of the transmission window of the wake-up signal over the licensed spectrum. In an embodiment, the second preset value may be determined by the fourth preset value and/or the length of the transmission window of the wake-up signal over the licensed spectrum. The period of the transmission window of the wake-up signal over the licensed spectrum and the length of the transmission window of the wake-up signal over the licensed spectrum are known. Illustratively, assuming that the first preset value is M and the second preset value is Q, the value of M may be M1/m, where m is a positive integer greater than zero, and M1 is the period of the transmission window corresponding to the wake-up signal when the wake-up signal is sent over the licensed spectrum; the value of Q is q*Q1, where q is a positive integer greater than zero, and Q1 is the length of the transmission window corresponding to the wake-up signal when the wake-up signal is sent over the licensed spectrum.

In an embodiment, sending the physical downlink control channel corresponding to the wake-up signal to the second communication node includes at least one of the following: sending the physical downlink control channel corresponding to the wake-up signal to the second communication node over the unlicensed spectrum; sending the physical downlink control channel corresponding to the wake-up signal during a paging occasion corresponding to a licensed spectrum; determining a spectrum for sending the physical downlink control channel corresponding to the wake-up signal according to a preset mode; or determining a spectrum for sending the physical downlink control channel corresponding to the wake-up signal according to preset signaling.

In the embodiment, after sending a wake-up signal over the unlicensed spectrum, the first communication node may seize resources again over the unlicensed spectrum, and after successful seizure, the first communication node sends a physical downlink control channel corresponding to the wake-up signal; the first communication node may also switch to the licensed spectrum and send a physical downlink control channel corresponding to the wake-up signal during a paging opportunity corresponding to the licensed spectrum; the first communication node may also determine a spectrum for sending a physical downlink control channel corresponding to the wake-up signal according to a preset mode and send the corresponding physical downlink control channel over the determined spectrum; the first communication node may also determine a spectrum for sending a physical downlink control channel corresponding to the wake-up signal according to the preset signaling and send the corresponding physical downlink control channel over the determined spectrum.

In an embodiment, sending the physical downlink control channel corresponding to the wake-up signal to the second communication node over the unlicensed spectrum includes the following: determining the time domain position of a last transmission opportunity for the wake-up signal according to the time domain position of a first transmission opportunity corresponding to the physical downlink control channel and a first time domain offset, or determining the time domain position of a first transmission opportunity for the wake-up signal according to the time domain position of a first transmission opportunity corresponding to the physical downlink control channel and a second time domain offset. In the embodiment, the first time domain offset and the second time domain offset may be predefined or may be configured by higher-layer signaling.

In an embodiment, sending the physical downlink control channel corresponding to the wake-up signal during the paging occasion corresponding to the licensed spectrum includes the following: determining the time domain position of a last transmission opportunity for the wake-up signal according to the time domain position of the paging opportunity and a third time domain offset, or determining the time domain position of a first transmission opportunity for the wake-up signal according to the time domain position of the paging opportunity and a fourth time domain offset. In the embodiment, the third time domain offset and the fourth time domain offset may be predefined or may be configured by higher-layer signaling.

In an embodiment, determining the spectrum for sending the physical downlink control channel corresponding to the wake-up signal according to the preset mode includes the following: in the case where the preset mode is configured as a first mode, sending the physical downlink control channel corresponding to the wake-up signal over the licensed spectrum; and/or in the case where the preset mode is configured as a second mode, sending the physical downlink control channel corresponding to the wake-up signal over the unlicensed spectrum.

In an embodiment, determining the spectrum for sending the physical downlink control channel corresponding to the wake-up signal according to the preset signaling includes the following: in the case where the preset signaling is configured as first signaling, sending the physical downlink control channel corresponding to the wake-up signal over the licensed spectrum; and/or in the case where the preset signaling is configured as second signaling, sending the physical downlink control channel corresponding to the wake-up signal over the unlicensed spectrum.

In the embodiment, the first signaling and the second signaling may be configured by higher-layer signaling. Illustratively, when the first signaling is 1, the first communication node sends the physical downlink control channel corresponding to the wake-up signal over the licensed spectrum; when the first signaling is 0, the first communication node sends the physical downlink control channel corresponding to the wake-up signal over the unlicensed spectrum.

In an embodiment, sending the wake-up signal and the physical downlink control channel over the unlicensed spectrum includes the following: The listen-before-talk (LBT) channel access corresponding to the wake-up signal is a conventional first type of channel access process; and the LBT channel access corresponding to the physical downlink control channel is a conventional second type of channel access process. In the embodiment, when the first communication node sends a wake-up signal and a physical downlink control channel over the unlicensed spectrum, the LBT channel access corresponding to the wake-up signal is a conventional first type of channel access process, and the LBT channel access corresponding to the physical downlink control channel is a conventional second type of channel access process.

In an embodiment, FIG. 2 is a flowchart of another communication method according to an embodiment of the present application. This embodiment is applied to the case where a wake-up signal is sent over the unlicensed spectrum. This embodiment may be performed by a second communication node. As shown in FIG. 2, this embodiment includes S210 to S220.

In S210, a wake-up signal sent by a first communication node is detected over the unlicensed spectrum.

In S220, the detection of a physical downlink control channel corresponding to the wake-up signal is determined according to the detection result of the wake-up signal.

In the embodiment, the second communication node detects a wake-up signal sent by the first communication node over the unlicensed spectrum; and after detecting the wake-up signal, the second communication node detects the physical downlink control channel corresponding to the wake-up signal sent by the first communication node.

In an embodiment, a first preset number of transmission opportunities for the wake-up signal are provided, where the first preset number of transmission opportunities are distributed in frequency domain resources and/or time domain resources.

In an embodiment, the period of a detection window where the wake-up signal is located is a first preset value, and/or the length of the detection window where the wake-up signal is located is a second preset value.

The first preset value is determined by at least one of the following: the period of a detection window for the wake-up signal over the licensed spectrum or a third preset value. The second preset value is determined by at least one of the following: the length of the detection window for the wake-up signal over the licensed spectrum or a fourth preset value. The third preset value is a positive integer greater than zero, and the fourth preset value is a positive integer greater than zero.

In an embodiment, determining the detection of the physical downlink control channel corresponding to the wake-up signal according to the detection result of the wake-up signal includes at least one of the following: in the case where the wake-up signal is detected, detecting the physical downlink control channel corresponding to the wake-up signal over the unlicensed spectrum; in the case where the wake-up signal is detected, detecting the physical downlink control channel corresponding to the wake-up signal during a paging occasion corresponding to the licensed spectrum; in the case where the wake-up signal is detected, determining a spectrum for detecting the physical downlink control channel corresponding to the wake-up signal according to a preset mode; or in the case where the wake-up signal is detected, determining a spectrum for detecting the physical downlink control channel corresponding to the wake-up signal according to preset signaling.

In the embodiment, after detecting a wake-up signal over the unlicensed spectrum, the second communication node continues to detect the physical downlink control channel corresponding to the wake-up signal over the unlicensed spectrum; the second communication node may also switch to the licensed spectrum and detect a physical downlink control channel corresponding to the wake-up signal during a paging opportunity corresponding to the licensed spectrum; the second communication node may also determine a spectrum for detecting a physical downlink control channel corresponding to the wake-up signal according to a preset mode and detect the corresponding physical downlink control channel over the determined spectrum; the second communication node may also determine a spectrum for detecting a physical downlink control channel corresponding to the wake-up signal according to the preset signaling and detect the corresponding physical downlink control channel over the determined spectrum.

In an embodiment, detecting the physical downlink control channel corresponding to the wake-up signal over the unlicensed spectrum includes the following: determining the time domain position of a last transmission opportunity for the wake-up signal according to the time domain position of a first transmission opportunity of the physical downlink control channel and a first time domain offset, or determining the time domain position of a first transmission opportunity for the wake-up signal according to the time domain position of a first transmission opportunity of the physical downlink control channel and a second time domain offset.

In an embodiment, detecting the physical downlink control channel corresponding to the wake-up signal during the paging occasion corresponding to the licensed spectrum includes the following: determining the time domain position of a last transmission opportunity for the wake-up signal according to the time domain position of the paging opportunity and a third time domain offset, or determining the time domain position of a first transmission opportunity for the wake-up signal according to the time domain position of the paging opportunity and a fourth time domain offset.

In an embodiment, determining the spectrum for detecting the physical downlink control channel corresponding to the wake-up signal according to the preset mode includes the following: in the case where the preset mode is configured as a first mode, detecting the physical downlink control channel corresponding to the wake-up signal over the licensed spectrum; and/or in the case where the preset mode is configured as a second mode, detecting the physical downlink control channel corresponding to the wake-up signal over the unlicensed spectrum.

In an embodiment, determining the spectrum for detecting the physical downlink control channel corresponding to the wake-up signal according to the preset signaling includes the following: in the case where the preset signaling is configured as first signaling, detecting the physical downlink control channel corresponding to the wake-up signal over the licensed spectrum; and/or in the case where the preset signaling is configured as second signaling, detecting the physical downlink control channel corresponding to the wake-up signal over the unlicensed spectrum.

In the embodiment, the first signaling and the second signaling may be configured by higher-layer signaling. Illustratively, when the first signaling is 1, the second communication node detects the physical downlink control channel corresponding to the wake-up signal over the licensed spectrum; when the first signaling is 0, the second communication node detects the physical downlink control channel corresponding to the wake-up signal over the unlicensed spectrum.

In an embodiment, the communication method applied to the second communication node also includes at least one of the following: determining a first parameter of the measurement process according to at least the detection result of the wake-up signal; or determining the reporting condition of a second parameter according to at least the detection result of the wake-up signal.

In the embodiment, the measurement may be performed through two parameters, that is, a wake-up signal and a synchronization signal and PBCH block (SSB). In an embodiment, whether to report the second parameter to the second communication node may be determined according to the detection result of the wake-up signal. The SSB is used to carry a primary synchronization signal (PSS), a secondary synchronization signal (SSS), and a master system information block (MIB).

In an embodiment, determining the first parameter of the measurement process according to at least the detection result of the wake-up signal includes the following: determining the first parameter according to the number of discontinuous reception (DRX) cycles in which no synchronization signal and PBCH block (SSB) is received during at least one synchronization measurement timing configuration (SMTC) period based on an SSB within a first time window and the number of wake-up signals detected within a second time window; and/or determining the maximum value of the first parameter according to a fifth preset value and the number of wake-up signals detected within a second time window.

In an embodiment, the time window is at least one of the following defined in the measurement process: a preset number of serving cells of consecutive DRX cycles whose number is same as a preset number of serving cells, the detection duration; the measurement duration, or the evaluation duration.

In an embodiment, determining the reporting condition of the second parameter according to at least the detection result of the wake-up signal includes detecting the wake-up signal and reporting the second parameter to the first communication node, where the second parameter at least includes one of the following: a received signal strength indicator or a channel occupancy.

It should be noted that the explanation of the parameters such as the wake-up signal, the transmission opportunity, the first preset value, the second preset value, the first time domain offset, the second time domain offset, the third time domain offset, the fourth time domain offset, the first signaling, the second signaling, the first mode, and the second mode in the communication method applied to the second communication node can be found in the description of the corresponding parameters in the embodiments of the communication method applied to the first communication node.

In the following examples, the conventional first type of channel access process is referred to as type1, and the conventional second type of channel access process is referred to as type2A or type2B.

In an example, an example is used where the first communication node is a base station and the second communication node is a terminal to illustrate the transmission process of the wake-up signal. It is assumed that the first preset number is (N = 4), the four transmission opportunities for the wake-up signal (WUS) are evenly distributed in the time domain, the preset interval between the transmission opportunities for the WUS is L, and the value of L is configured by higher-layer signaling. The base station uses type1 to seize resources in the unlicensed spectrum during the first transmission opportunity of the WUS, sends the WUS to the terminal during the first transmission opportunity of the WUS, and uses type2A to seize resources in the unlicensed spectrum to send the physical downlink control channel (PDCCH) corresponding to the WUS.

In an example, an example is used where the first communication node is a base station and the second communication node is a terminal to illustrate the transmission process of the wake-up signal. It is assumed that the first preset number is (N = 4), the four transmission opportunities for the wake-up signal are evenly distributed in the time domain, the preset interval between the transmission opportunities for the WUS is L, and the value of L is configured by higher-layer signaling. The base station uses type1 to seize resources in the unlicensed spectrum during the second transmission opportunity of the WUS, sends the WUS during the second transmission opportunity of the WUS, and sends the PDCCH corresponding to the WUS at the paging occasion (PO) position corresponding to the licensed spectrum.

In an example, an example is used where the first communication node is a base station and the second communication node is a terminal to illustrate the transmission process of the wake-up signal. It is assumed that the first preset number is (N = 4), the bandwidth corresponding to the WUS is 20 MHz, the terminal bandwidth is 40 MHz, the number of transmission opportunities distributed in the frequency domain is k, and k = 2. Therefore, among the N transmission opportunities of the WUS, two are distributed in the frequency domain, and two are distributed in the time domain. FIG. 3 is a diagram illustrating the configuration of transmission opportunities according to an embodiment of the present application. As shown in FIG. 3, the horizontal axis represents the time domain, and the vertical axis represents the frequency domain, where two transmission opportunities are distributed in the frequency domain, and two transmission opportunities are distributed in the time domain.

The base station uses type1 to seize resources in the unlicensed spectrum during transmission opportunity 1 of the WUS, sends the WUS during transmission opportunity 1 of the WUS, and sends the PDCCH corresponding to the WUS at the PO position corresponding to the licensed spectrum. If the base station seizes resources in the unlicensed spectrum during both transmission opportunity 1 of the WUS and transmission opportunity 2 of the WUS, the base station may choose to send the WUS at the transmission opportunity of the WUS with the lower frequency, at the transmission opportunity of the WUS with the higher frequency, or the pre-agreed transmission opportunity of the WUS between the base station and the terminal.

In an example, an example is used where the first communication node is a base station and the second communication node is a terminal to illustrate the transmission process of the wake-up signal. It is assumed that the base station sends the WUS over the licensed spectrum, where the length of the transmission window is Q1, the period of the transmission window is M1, and the value of the parameter q is configured by signaling. If the base station sends the WUS over the unlicensed spectrum, the length of the transmission window corresponding to the WUS is Q = q*Q1, and the period of the transmission window is M1. The base station may send the WUS at any position within the transmission window, and the base station sends the PDCCH corresponding to WUS at the PO position corresponding to the licensed spectrum.

In an example, an example is used where the first communication node is a base station and the second communication node is a terminal to illustrate the transmission process of the wake-up signal. It is assumed that the base station sends the WUS over the licensed spectrum, where the period of the transmission window is M1, the length of the transmission window is Q1, and the value of m is configured by signaling. If the base station sends the WUS over the unlicensed spectrum, the period of the transmission window corresponding to the WUS is M = M1/m, and the length of the transmission window is Q = Q1. The base station may send the WUS at any position within the transmission window, and the base station sends the PDCCH corresponding to WUS at the PO position corresponding to the licensed spectrum.

In an example, an example is used where the first communication node is a base station and the second communication node is a terminal to illustrate the transmission process of the wake-up signal. It is assumed that the base station sends the WUS over the licensed spectrum, where the period of the transmission window is M1, the length of the transmission window is Q1, and the values of m and q are configured by signaling. If the base station sends the WUS over the unlicensed spectrum, the period of the transmission window corresponding to the WUS is M = M1/m, and the length of the transmission window is Q = q*Q1. The base station may send the WUS at any position within the transmission window, and the base station sends the PDCCH corresponding to WUS at the PO position corresponding to the licensed spectrum.

In an example, an example is used where the first communication node is a base station and the second communication node is a terminal to illustrate the transmission process of the wake-up signal. It is assumed that according to preset signaling, the terminal detects the WUS over the unlicensed spectrum and detects the PDCCH corresponding to the WUS over the licensed spectrum. It is assumed that the first preset number is (N = 4), the four transmission opportunities for the WUS are distributed in the time domain resources, the preset interval between transmission opportunities for the WUS is L, the value of L is configured by higher-layer signaling, and the third time domain offset is preset.

The terminal determines the time domain position of the last transmission opportunity for the WUS according to the time domain position of the PO and the third time domain offset. The terminal determines the position of the first transmission opportunity for the WUS according to the preset interval L between the transmission opportunities and the number N of transmission opportunities. The terminal starts detecting the WUS from the first transmission opportunity for the WUS, and if the WUS is detected, the terminal detects the corresponding PDCCH.

In an example, an example is used where the first communication node is a base station and the second communication node is a terminal to illustrate the transmission process of the wake-up signal. It is assumed that according to the preset mode, the terminal detects the WUS over the unlicensed spectrum and detects the PDCCH corresponding to the WUS over the unlicensed spectrum. It is assumed that the first preset number is (N = 4), the four transmission opportunities for the WUS are distributed in the time domain resources, the preset interval between transmission opportunities for the WUS is L, the value of L is configured by higher-layer signaling, and the first time domain offset is preset.

The terminal determines the time domain position of the last transmission opportunity for the WUS according to the time domain position of the first transmission opportunity for the PDCCH and the first offset. The terminal determines the position of the first transmission opportunity for the WUS according to the preset interval L between the transmission opportunities and the number N of transmission opportunities. The terminal starts detecting the WUS from the first transmission opportunity for the WUS, and if the WUS is detected, the terminal starts detecting the corresponding PDCCH.

In an example, an example is used where the first communication node is a base station and the second communication node is a terminal to illustrate the transmission process of the wake-up signal. It is assumed that the terminal detects WUS over the licensed spectrum, the corresponding period of the detection window is M1, and the length of the detection window is Q1. It is assumed that the terminal detects the WUS over the unlicensed spectrum, and when the terminal performs detection, the corresponding period of the detection window is M = M1/m, and the length of the detection window is Q = q*Q1.

In an example, an example is used where the first communication node is a base station and the second communication node is a terminal to illustrate the transmission process of the wake-up signal. Assuming that the terminal performs a clear channel assessment (CCA) on a serving cell and the measurement process is the measurement of the cell, the terminal determines the first parameter according to the detection result of the WUS, that is, Mₛ in a preset number of serving cells of (recorded as Nserv) consecutive DRX cycles. Assuming that the length of a DRX cycle is 1.28 s, as shown in Table 1, the value of Nserv is 2 + Mₛ, where Mₛ is the number of DRX cycles in which no SSB is received during at least one SMTC period within a first time window minus the number of WUS detected in a second time window, the maximum value of Mₛ is 4, and the first time window and the second time window are Nserv DRX cycles. The Mₛ values under other DRX cycles are as follows:

**Table 1 Mapping Relationship between Mₛ Value and DRX Cycle**

| DRX cycle [s] | Nserv [number of DRX cycles] |
|---|---|
| 0.32 | M1*4 + M1*Mₛ |
| 0.64 | M1*4 + M1*Mₛ |
| 1.28 | 2 + Mₛ |
| 2.56 | 2 + Mₛ |

Number of DRX cycles represents the number of DRX cycles, and the value of M1 may be determined by existing technologies.

In an example, an example is used where the first communication node is a base station and the second communication node is a terminal to illustrate the transmission process of the wake-up signal. Assuming that the terminal performs a CCA on a serving cell and the measurement process is the measurement of the cell, the terminal determines the first parameter according to the detection result of the WUS, that is, Mₛ in Nserv. Assuming that the length of the DRX cycle is 1.28 s, the value of Nserv is 2 + Mₛ, where Mₛ is the number of DRX cycles in which no SSB is received during at least one SMTC period in Nserv, the maximum value of Mₛ, Msmax, is the number of WUSs detected during Ms'-Nserv. Other DRX cycles Ms' are as follows: when the length of the DRX cycle is less than 1.28 s, Ms' is 8; when the length of the DRX cycle is greater than or equal to 1.28 s, Ms' is 4.

In an example, an example is used where the first communication node is a base station and the second communication node is a terminal to illustrate the transmission process of the wake-up signal. Assuming that the terminal performs a CCA on a serving cell and the target cell, and the measurement process is the measurement of the adjacent cell, the terminal determines the first parameter according to the detection result of the WUS, that is, M_{d} in the detection duration (recorded as Tdetect). Assuming that the length of the DRX cycle is 1.28 s, the value of Tdetect is 25 + M_{d}, where the value of M_{d} is the number of DRX cycles in which no SSB is received during at least one SMTC period in Tdetect minus the number of WUSs detected during Tdetect, and the maximum value of M_{d} is 16.

In an example, an example is used where the first communication node is a base station and the second communication node is a terminal to illustrate the transmission process of the wake-up signal. Assuming that the terminal performs a CCA on a serving cell and the target cell, and the measurement process is the measurement of the adjacent cell, the terminal determines the first parameter according to the detection result of the WUS, that is, Mₘ in the measurement duration (recorded as Tmeasure). Assuming that the length of the DRX cycle is 1.28 s, the value of Tdetect is 25 + Mₘ, where the value of Mₘ is the number of DRX cycles in which no SSB is received during at least one SMTC period in Tmeasure minus the number of WUSs detected during Tmeasure, and the maximum value of Mₘ is 4.

In an example, an example is used where the first communication node is a base station and the second communication node is a terminal to illustrate the transmission process of the wake-up signal. Assuming that the terminal performs a CCA on a serving cell and the target cell, and the measurement process is the measurement of the adjacent cell, the terminal determines the first parameter according to the detection result of the WUS, that is, Mₑ in the evaluation duration (recorded as Tevaluate). Assuming that the length of the DRX cycle is 1.28 s, the value of Tdetect is 1 + Mₑ, where the value of Mₑ is the number of DRX cycles in which no SSB is received during at least one SMTC period in Tevaluate minus the number of WUSs detected during Tevaluate, and the maximum value of Mₑ is 8.

In an example, an example is used where the first communication node is a base station and the second communication node is a terminal to illustrate the transmission process of the wake-up signal. Assuming that the terminal performs a CCA on a serving cell and the target cell, and the measurement process is the measurement of the adjacent cell, the terminal determines the first parameter according to the detection result of the WUS, that is, M_{d} in the detection duration (recorded as Tdetect). Assuming that the length of the DRX cycle is 1.28 s, the value of Tdetect is 25 + M_{d}, where the value of M_{d} is the number of DRX cycles in which no SSB is received during at least one SMTC period in Tdetect, and the maximum value of M_{d} is a fixed value 16 minus the number of WUSs detected during Tdetect.

In an example, an example is used where the first communication node is a base station and the second communication node is a terminal to illustrate the transmission process of the wake-up signal. Assuming that the terminal performs a CCA on a serving cell and the target cell, and the measurement process is the measurement of the adjacent cell, the terminal determines the first parameter according to the detection result of the WUS, that is, Mₘ in the measurement duration (recorded as Tmeasure). Assuming that the length of the DRX cycle is 1.28 s, the value of Tdetect is 25 + Mₘ, where the value of Mₘ is the number of DRX cycles in which no SSB is received during at least one SMTC period in Tmeasure, and the maximum value of Mₘ is a fixed value 4 minus the number of WUSs detected during Tmeasure.

In an example, an example is used where the first communication node is a base station and the second communication node is a terminal to illustrate the transmission process of the wake-up signal. Assuming that the terminal performs a CCA on a serving cell and the target cell, and the measurement process is the measurement of the adjacent cell, the terminal determines the first parameter according to the detection result of the WUS, that is, Mₑ in the evaluation duration (recorded as Tevaluate). Assuming that the length of the DRX cycle is 1.28 s, the value of Tdetect is 5 + Mₑ, where the value of Mₑ is the number of DRX cycles in which no SSB is received during at least one SMTC period in Tevaluate, and the maximum value of Mₑ is a fixed value 8 minus the number of WUSs detected during Tevaluate.

In an example, an example is used where the first communication node is a base station and the second communication node is a terminal to illustrate the transmission process of the wake-up signal. Assuming that the terminal detects the WUS over the unlicensed spectrum, the terminal reports the received signal strength indicator (RSSI) after a first interval. The value of the first interval is a predefined value or a value configured by signaling.

In an example, an example is used where the first communication node is a base station and the second communication node is a terminal to illustrate the transmission process of the wake-up signal. Assuming that the terminal detects the WUS over the unlicensed spectrum, the terminal reports the channel occupancy (CO) after a second interval. The value of the second interval is a predefined value or a value configured by signaling.

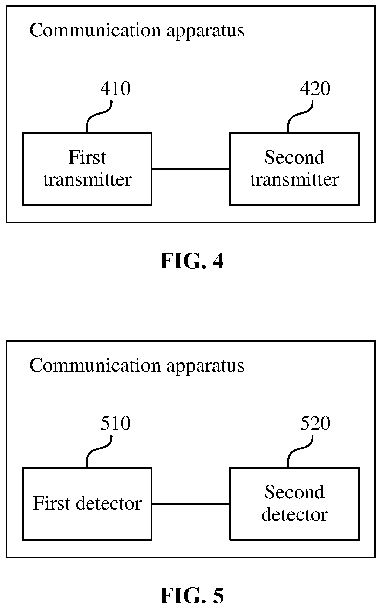

In an embodiment, FIG. 4 is a block diagram of a communication apparatus according to an embodiment of the present application. This embodiment is applied to a first communication node. As shown in FIG. 4, the communication apparatus in this embodiment includes a first transmitter 410 and a second transmitter 420.

The first transmitter 410 is configured to send a wake-up signal to a second communication node over the unlicensed spectrum.

The second transmitter 420 is configured to send a physical downlink control channel corresponding to the wake-up signal to the second communication node.

In an embodiment, a first preset number of transmission opportunities for the wake-up signal are provided, where the first preset number of transmission opportunities are distributed in frequency domain resources and/or time domain resources.

In an embodiment, the period of a transmission window where the wake-up signal is located is a first preset value, and/or the length of the transmission window where the wake-up signal is located is a second preset value.

The first preset value is determined by at least one of the following: the period of a transmission window for the wake-up signal over the licensed spectrum or a third preset value. The second preset value is determined by at least one of the following: the length of the transmission window for the wake-up signal over the licensed spectrum or a fourth preset value. The third preset value is a positive integer greater than zero, and the fourth preset value is a positive integer greater than zero.

In an embodiment, sending the physical downlink control channel corresponding to the wake-up signal to the second communication node includes at least one of the following: sending the physical downlink control channel corresponding to the wake-up signal to the second communication node over the unlicensed spectrum; sending the physical downlink control channel corresponding to the wake-up signal during a paging occasion corresponding to a licensed spectrum; determining a spectrum for sending the physical downlink control channel corresponding to the wake-up signal according to a preset mode; or determining a spectrum for sending the physical downlink control channel corresponding to the wake-up signal according to preset signaling.

In an embodiment, sending the physical downlink control channel corresponding to the wake-up signal to the second communication node over the unlicensed spectrum includes the following: determining the time domain position of a last transmission opportunity for the wake-up signal according to the time domain position of a first transmission opportunity corresponding to the physical downlink control channel and a first time domain offset, or determining the time domain position of a first transmission opportunity for the wake-up signal according to the time domain position of a first transmission opportunity corresponding to the physical downlink control channel and a second time domain offset.

In an embodiment, sending the physical downlink control channel corresponding to the wake-up signal during the paging occasion corresponding to the licensed spectrum includes the following: determining the time domain position of a last transmission opportunity for the wake-up signal according to the time domain position of the paging opportunity and a third time domain offset, or determining the time domain position of a first transmission opportunity for the wake-up signal according to the time domain position of the paging opportunity and a fourth time domain offset.

In an embodiment, determining the spectrum for sending the physical downlink control channel corresponding to the wake-up signal according to the preset mode includes the following: in the case where the preset mode is configured as a first mode, sending the physical downlink control channel corresponding to the wake-up signal over the licensed spectrum; and/or in the case where the preset mode is configured as a second mode, sending the physical downlink control channel corresponding to the wake-up signal over the unlicensed spectrum.

In an embodiment, determining the spectrum for sending the physical downlink control channel corresponding to the wake-up signal according to the preset signaling includes the following: in the case where the preset signaling is configured as first signaling, sending the physical downlink control channel corresponding to the wake-up signal over the licensed spectrum; and/or in the case where the preset signaling is configured as second signaling, sending the physical downlink control channel corresponding to the wake-up signal over the unlicensed spectrum.

In an embodiment, sending the wake-up signal and the physical downlink control channel over the unlicensed spectrum includes the following: The listen-before-talk (LBT) channel access corresponding to the wake-up signal is a conventional first type of channel access process; and the LBT channel access corresponding to the physical downlink control channel is a conventional second type of channel access process.

The communication apparatus provided in the embodiment is configured to perform the communication method applied by a first communication node in the embodiment shown in FIG. 1 and has similar implementation principles and technical effects.

In an embodiment, FIG. 5 is a block diagram of another communication apparatus according to an embodiment of the present application. The embodiment is applied to a second communication node. As shown in FIG. 5, the communication apparatus in this embodiment includes a first detector 510 and a second detector 520.

The first detector 510 is configured to detect a wake-up signal sent by a first communication node over the unlicensed spectrum.

The second detector 520 is configured to determine the detection of a physical downlink control channel corresponding to the wake-up signal according to the detection result of the wake-up signal.

In an embodiment, a first preset number of transmission opportunities for the wake-up signal are provided, where the first preset number of transmission opportunities are distributed in frequency domain resources and/or time domain resources.

In an embodiment, the period of a detection window where the wake-up signal is located is a first preset value, and/or the length of the detection window where the wake-up signal is located is a second preset value.

The first preset value is determined by at least one of the following: the period of a detection window for the wake-up signal over the licensed spectrum or a third preset value. The second preset value is determined by at least one of the following: the length of the detection window for the wake-up signal over the licensed spectrum or a fourth preset value. The third preset value is a positive integer greater than zero, and the fourth preset value is a positive integer greater than zero.

In an embodiment, determining the detection of the physical downlink control channel corresponding to the wake-up signal according to the detection result of the wake-up signal includes at least one of the following: in the case where the wake-up signal is detected, detecting the physical downlink control channel corresponding to the wake-up signal over the unlicensed spectrum; in the case where the wake-up signal is detected, detecting the physical downlink control channel corresponding to the wake-up signal during a paging occasion corresponding to the licensed spectrum; in the case where the wake-up signal is detected, determining a spectrum for detecting the physical downlink control channel corresponding to the wake-up signal according to a preset mode; or in the case where the wake-up signal is detected, determining a spectrum for detecting the physical downlink control channel corresponding to the wake-up signal according to preset signaling.

In an embodiment, detecting the physical downlink control channel corresponding to the wake-up signal over the unlicensed spectrum includes the following: determining the time domain position of a last transmission opportunity for the wake-up signal according to the time domain position of a first transmission opportunity of the physical downlink control channel and a first time domain offset, or determining the time domain position of a first transmission opportunity for the wake-up signal according to the time domain position of a first transmission opportunity of the physical downlink control channel and a second time domain offset.

In an embodiment, detecting the physical downlink control channel corresponding to the wake-up signal during the paging occasion corresponding to the licensed spectrum includes the following: determining the time domain position of a last transmission opportunity for the wake-up signal according to the time domain position of the paging opportunity and a third time domain offset, or determining the time domain position of a first transmission opportunity for the wake-up signal according to the time domain position of the paging opportunity and a fourth time domain offset.

In an embodiment, determining the spectrum for detecting the physical downlink control channel corresponding to the wake-up signal according to the preset mode includes the following: in the case where the preset mode is configured as a first mode, detecting the physical downlink control channel corresponding to the wake-up signal over the licensed spectrum; and/or in the case where the preset mode is configured as a second mode, detecting the physical downlink control channel corresponding to the wake-up signal over the unlicensed spectrum.

In an embodiment, determining the spectrum for detecting the physical downlink control channel corresponding to the wake-up signal according to the preset signaling includes the following: in the case where the preset signaling is configured as first signaling, detecting the physical downlink control channel corresponding to the wake-up signal over the licensed spectrum; and/or in the case where the preset signaling is configured as second signaling, detecting the physical downlink control channel corresponding to the wake-up signal over the unlicensed spectrum.

In an embodiment, the communication method applied to the second communication node also includes at least one of the following: determining a first parameter of the measurement process according to at least the detection result of the wake-up signal; or determining the reporting condition of a second parameter according to at least the detection result of the wake-up signal.

In an embodiment, determining the first parameter of the measurement process according to at least the detection result of the wake-up signal includes the following: determining the first parameter according to the number of discontinuous reception (DRX) cycles in which no synchronization signal and PBCH block (SSB) is received during at least one SMTC period within a first time window and the number of wake-up signals detected within a second time window; and/or determining the maximum value of the first parameter according to a fifth preset value and the number of wake-up signals detected within a second time window.

In an embodiment, the time window is at least one of the following defined in the measurement process: consecutive DRX cycles whose number is same as a preset number of serving cells; the detection duration; the measurement duration; or the evaluation duration.

In an embodiment, determining the reporting condition of the second parameter according to at least the detection result of the wake-up signal includes detecting the wake-up signal and reporting the second parameter to the first communication node; where the second parameter at least includes one of the following: a received signal strength indicator or a channel occupancy.

The communication apparatus provided in the embodiment is configured to perform the communication method applied by a second communication node in the embodiment shown in FIG. 2 and has similar implementation principles and technical effects.

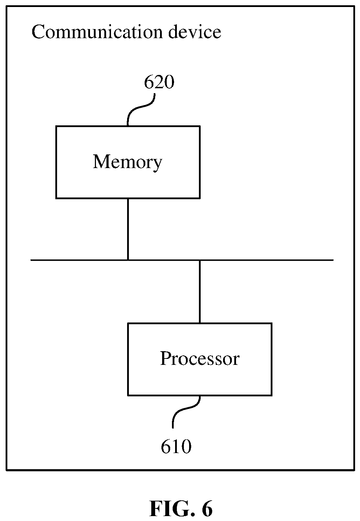

In an embodiment, FIG. 6 is a diagram illustrating the structure of a communication device according to an embodiment of the present application. As shown in FIG. 6, the device provided in the present application includes a processor 610 and a memory 620. One or more processors 610 may be included in the device. One processor 610 is shown as an example in FIG. 6. One or more memories 620 may be included in the device. One memory 620 is shown as an example in FIG. 6. The processor 610 and the memory 620 of the device are connected by a bus or in other manners, and the connection by a bus is taken as an example in FIG. 6. In the embodiment, the device may be a first communication node or a second communication node.

As a computer-readable storage medium, the memory 620 may be configured to store software programs, computer-executable programs, and modules, such as program instructions/modules (for example, the first transmitter 410 and the second transmitter 420 in the communication apparatus) corresponding to the device according to any embodiment of the present application. The memory 620 may include a program storage region and a data storage region. The program storage region may store an operating system and an application program required by at least one function. The data storage region may store data created according to the use of the device. Additionally, the memory 620 may include a high-speed random-access memory and may also include a nonvolatile memory such as at least one disk memory, flash memory, or another nonvolatile solid-state memory. In some examples, the memory 620 may include memories that are remotely disposed relative to the processor 610, and these remote memories may be connected to the device via a network. Examples of the preceding network include but are not limited to, the Internet, an intranet, a local area network, a mobile communication network, and a combination thereof.

In the case where the communication device is a first communication node, the preceding device may be configured to execute the communication method applied to the first communication node in any one of the preceding embodiments and has corresponding functions and effects.

In the case where the communication device is a second communication node, the preceding device may be configured to execute the communication method applied to the second communication node in any one of the preceding embodiments and has corresponding functions and effects.

The embodiment of the present application also provides a storage medium including computer-executable instructions which, when executed by a computer processor, are configured to execute a communication method applied to a first communication node. The method includes sending a wake-up signal to a second communication node over the unlicensed spectrum and sending a physical downlink control channel corresponding to the wake-up signal to the second communication node.

The embodiment of the present application also provides a storage medium including computer-executable instructions which, when executed by a computer processor, are configured to execute a communication method applied to a second communication node. The method includes detecting a wake-up signal sent by a first communication node over the unlicensed spectrum and determining the detection of a physical downlink control channel corresponding to the wake-up signal according to the detection result of the wake-up signal.

It is to be understood by those skilled in the art that the term "user equipment" covers any suitable type of wireless user equipment, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology such as, but not limited to, a read-only memory (ROM), a random-access memory (RAM), or an optical memory device and system (a digital video disc (DVD), or a compact disc (CD)). Computer-readable media may include non-transitory storage media. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A communication method, the method being applied to a first communication node and comprising:
sending a wake-up signal to a second communication node over an unlicensed spectrum; and
sending a physical downlink control channel corresponding to the wake-up signal to the second communication node.

2. The method of claim 1, wherein a first preset number of transmission opportunities for the wake-up signal are provided; wherein the first preset number of transmission opportunities are distributed in at least one of frequency domain resources or time domain resources.

3. The method of claim 1, wherein the wake-up signal satisfies at least one of the following: a period of a transmission window where the wake-up signal is located is a first preset value, and a length of the transmission window where the wake-up signal is located is a second preset value;
wherein the first preset value is determined by at least one of the following: a period of a transmission window for the wake-up signal over a licensed spectrum or a third preset value; and the second preset value is determined by at least one of the following: a length of the transmission window for the wake-up signal over the licensed spectrum or a fourth preset value; wherein the third preset value is a positive integer greater than zero, and the fourth preset value is a positive integer greater than zero.

4. The method of claim 1, wherein sending the physical downlink control channel corresponding to the wake-up signal to the second communication node comprises at least one of the following:
sending the physical downlink control channel corresponding to the wake-up signal to the second communication node over the unlicensed spectrum;
sending the physical downlink control channel corresponding to the wake-up signal during a paging occasion corresponding to a licensed spectrum;
determining a spectrum for sending the physical downlink control channel corresponding to the wake-up signal according to a preset mode; or
determining a spectrum for sending the physical downlink control channel corresponding to the wake-up signal according to preset signaling.

5. The method of claim 4, wherein sending the physical downlink control channel corresponding to the wake-up signal to the second communication node over the unlicensed spectrum comprises:
determining a time domain position of a last transmission opportunity for the wake-up signal according to a time domain position of a first transmission opportunity corresponding to the physical downlink control channel and a first time domain offset, or determining a time domain position of a first transmission opportunity for the wake-up signal according to a time domain position of a first transmission opportunity corresponding to the physical downlink control channel and a second time domain offset.

6. The method of claim 4, wherein sending the physical downlink control channel corresponding to the wake-up signal during the paging occasion corresponding to the licensed spectrum comprises:
determining a time domain position of a last transmission opportunity for the wake-up signal according to a time domain position of the paging opportunity and a third time domain offset, or
determining a time domain position of a first transmission opportunity for the wake-up signal according to a time domain position of the paging opportunity and a fourth time domain offset.

7. The method of claim 4, wherein determining the spectrum for sending the physical downlink control channel corresponding to the wake-up signal according to the preset mode comprises at least one of the following:
in a case where the preset mode is configured as a first mode, sending the physical downlink control channel corresponding to the wake-up signal over the licensed spectrum; or
in a case where the preset mode is configured as a second mode, sending the physical downlink control channel corresponding to the wake-up signal over the unlicensed spectrum.

8. The method of claim 4, wherein determining the spectrum for sending the physical downlink control channel corresponding to the wake-up signal according to the preset signaling comprises at least one of the following:
in a case where the preset signaling is configured as first signaling, sending the physical downlink control channel corresponding to the wake-up signal over the licensed spectrum; or
in a case where the preset signaling is configured as second signaling, sending the physical downlink control channel corresponding to the wake-up signal over the unlicensed spectrum.

9. The method of claim 4, wherein sending the wake-up signal and the physical downlink control channel corresponding to the wake-up signal over the unlicensed spectrum comprises:
a listen-before-talk (LBT) channel access corresponding to the wake-up signal being a conventional first type of channel access process; and an LBT channel access corresponding to the physical downlink control channel being a conventional second type of channel access process.

10. A communication method, the method being applied to a second communication node and comprising:
detecting a wake-up signal sent by a first communication node over an unlicensed spectrum; and
determining a detection of a physical downlink control channel corresponding to the wake-up signal according to a detection result of the wake-up signal.

11. The method of claim 10, wherein a first preset number of transmission opportunities for the wake-up signal are provided; wherein the first preset number of transmission opportunities are distributed in at least one of frequency domain resources or time domain resources.

12. The method of claim 10, wherein the wake-up signal satisfies at least one of the following: a period of a detection window where the wake-up signal is located is a first preset value, and a length of the detection window where the wake-up signal is located is a second preset value;
wherein the first preset value is determined by at least one of the following: a period of a detection window for the wake-up signal over a licensed spectrum or a third preset value; and the second preset value is determined by at least one of the following: a length of the detection window for the wake-up signal over the licensed spectrum or a fourth preset value; wherein the third preset value is a positive integer greater than zero, and the fourth preset value is a positive integer greater than zero.

13. The method of claim 10, wherein determining the detection of the physical downlink control channel corresponding to the wake-up signal according to the detection result of the wake-up signal comprises at least one of the following:
in a case where the wake-up signal is detected, detecting the physical downlink control channel corresponding to the wake-up signal over the unlicensed spectrum;
in a case where the wake-up signal is detected, detecting the physical downlink control channel corresponding to the wake-up signal during a paging occasion corresponding to a licensed spectrum;
in a case where the wake-up signal is detected, determining a spectrum for detecting the physical downlink control channel corresponding to the wake-up signal according to a preset mode; or
in a case where the wake-up signal is detected, determining a spectrum for detecting the physical downlink control channel corresponding to the wake-up signal according to preset signaling.

14. The method of claim 13, wherein detecting the physical downlink control channel corresponding to the wake-up signal over the unlicensed spectrum comprises:
determining a time domain position of a last transmission opportunity for the wake-up signal according to a time domain position of a first transmission opportunity for the physical downlink control channel and a first time domain offset, or determining a time domain position of a first transmission opportunity for the wake-up signal according to a time domain position of a first transmission opportunity for the physical downlink control channel and a second time domain offset.

15. The method of claim 13, wherein detecting the physical downlink control channel corresponding to the wake-up signal during the paging occasion corresponding to the licensed spectrum comprises:
determining a time domain position of a last transmission opportunity for the wake-up signal according to a time domain position of the paging opportunity and a third time domain offset, or
determining a time domain position of a first transmission opportunity for the wake-up signal according to a time domain position of the paging opportunity and a fourth time domain offset.

16. The method of claim 13, wherein determining the spectrum for detecting the physical downlink control channel corresponding to the wake-up signal according to the preset mode comprises at least one of the following:
in a case where the preset mode is configured as a first mode, detecting the physical downlink control channel corresponding to the wake-up signal over the licensed spectrum; or
in a case where the preset mode is configured as a second mode, detecting the physical downlink control channel corresponding to the wake-up signal over the unlicensed spectrum.

17. The method of claim 13, wherein determining the spectrum for detecting the physical downlink control channel corresponding to the wake-up signal according to the preset signaling comprises at least one of the following:
in a case where the preset signaling is configured as first signaling, detecting the physical downlink control channel corresponding to the wake-up signal over the licensed spectrum; or
in a case where the preset signaling is configured as second signaling, detecting the physical downlink control channel corresponding to the wake-up signal over the unlicensed spectrum.

18. The method of claim 10, further comprising at least one of the following:
determining a first parameter of a measurement process according to at least the detection result of the wake-up signal; or
determining a reporting condition of a second parameter according to at least the detection result of the wake-up signal.

19. The method of claim 18, wherein determining the first parameter of the measurement process according to at least the detection result of the wake-up signal comprises at least one of the following:
determining the first parameter according to a number of discontinuous reception (DRX) cycles in which no synchronization signal block (SSB) is received during at least one synchronization measurement timing configuration (SMTC) period based on an SSB within a first time window and a number of wake-up signals detected within a second time window; or
determining a maximum value of the first parameter according to a fifth preset value and a number of wake-up signals detected within a second time window.

20. The method of claim 19, wherein the time window is at least one of the following defined in the measurement process: consecutive DRX cycles whose number is same as a preset number of serving cells; a detection duration; a measurement duration; or an evaluation duration.

21. The method of claim 18, wherein determining the reporting condition of the second parameter according to at least the detection result of the wake-up signal comprises:
detecting the wake-up signal, and reporting the second parameter to the first communication node;
wherein the second parameter at least comprises one of the following: a received signal strength indicator or a channel occupancy.

22. A communication device, comprising:
a memory and one or more processors; wherein
the memory is configured to store one or more programs; and
when executed by the one or more processors, the one or more programs cause the one or more processors to perform the method of any one of claims 1 to 9 or 10 to 21.

23. A storage medium storing a computer program which, when executed by a processor, performs the method of any one of claims 1 to 9 or 10 to 21.
